# EUROPEAN PATENT APPLICATION

(11) **EP 1 746 858 A1**
(43) Date of publication of application: **24.01.2007**
(21) Application number: 05015817.9
(22) Date of filing: 20.07.2005
(51) Int. Cl.: H04Q 11/00

(54) **Three way coupler for a passive optical network**

(71) Applicant: SIEMENS AKTIENGESELLSCHAFT, 80333 München (DE)
(72) Inventor: Ribeiro dos Santos, José Miguel Ramalho, 1170-329 Lisboa (PT)

(57) **Abstract**

The present invention relates to passive optical networks and more particularly to protecting a passive optical network

A three way coupler for a Passive Optical Network (PON). Terminals Ta, Tb, Tc input optical signals a, b, c, respectively. At least one splitter splits for splitting optical signal a into signals a1 and a2, optical signal b into b1 and b2 and optical signal c into c1 and c2. At least one adder adds signals a1+c2, a2+b1 and b2+c1.

## Description

The present invention relates to passive optical networks and more particularly to protecting a passive optical network

Fiber To The Premises (FTTP); and/or Fiber To The Home (FTTH), is one of the hottest trends in optics at present. FTTP is a generic term for optical subscriber access technology. FTTP both competes with, and complements, other subscriber access technologies like DSL or cable. With FTTP, because the access media is optical fiber, the bandwidth potential is many times greater than that of copper based media.

Passive Optical Networks (PON) is the leading technology being used in FTTx deployments. PON is different than other optical network topologies in that it is a Point to Multi-Point (P2MP) topology. From the Central Office's (CO) Optical Line Terminal (OLT), a single strand of fiber goes out to a passive optical splitter where its signal is multiplied to 32 different lines. The Transmit and Receive signals operate on different wavelengths allowing bi-directional operation over a single fiber. Anything transmitted from the OLT is transmitted to all 32 lines. It is up to the customer's system (Optical Network Unit - ONU) to determine what packets are for that customer. All other packets are discarded. The PON current standards have defined downstream data rates up to 2.5Gbps.

Given the ability to reach several multiple subscribers and allo bi-directional operation, PONs are emerging as the network technology of choice. In Japan, for example, the PON market, thanks to government subsidies, is more established and growing at a rate of 300% year to year. By comparison, DSL is growing at 150% year to year. The PON market in North America is starting to emerge. In the U.S., Verizon, SBC, and Bell South have all announced some type of PON deployment. Industry analysts expect an equally large take (or adoption) rate by North American consumers.

A Passive Optical Network (PON) is a single, shared optical fiber that uses inexpensive optical splitters to divide the single fiber into separate strands feeding individual subscribers. PONs are considered "passive" because, other than at the CO and subscriber endpoints, there are no active electronics within the access network. In other words, a PON optical transmission has no power requirements or active electronic parts once the signal is going through the network.

A PON consists of an Optical Line Termination (OLT) at the communication company's office and a number of Optical Network Units (ONUs) near end users. Typically, up to 32 ONUs can be connected to an OLT. A passive optical network (PON) system brings optical fiber cabling and signals all or most of the way to the end user. Depending on where the PON terminates, the system can be described as fiber-to-the-curb (FTTC), fiber-to-the-building (FTTB), or fiber-to-the-home (FTTH).

When transmitting data, because all 32 lines are multiplexed to a single fiber, only one ONU may transmit at a time. To solve this problem, each ONU is given a time slot where it can transmit a burst of data. The order of transmission is determined by OLT. From a component point of view, OLT to ONU, the link operates in a continuous mode, exactly like in an ordinary point-to-point link (P2P). In ONU to OLT, the link must operate in a bursty mode. Each ONU will send a burst of data. If the ONU is not transmitting, the laser must be in an off state. Therefore, the laser driver needs to be able to turn on and off very quickly.

In a stand-alone system, a PON could deliver up to 622 Mbps downstream to the user and up to 155 Mbps upstream. Multiple users of a PON could be allocated portions of this bandwidth.

A PON could also serve as a trunk between a larger system, such as a CATV system, and a neighborhood, building, or home Ethernet network on coaxial cable.

There are various types of PON. The general technology is the same. The differences are in the specifications and the upper layer protocols. The most exciting of these is perhaps EPON, also known as GE-PON. Ethernet for subscriber access networks, also referred to as "Ethernet in the First Mile", or EFM, combines a minimal set of extensions to the IEEE 802.3 Media Access Control (MAC) and MAC Control sublayers with a family of Physical (PHY) Layers. These Physical Layers include optical fiber and unshielded twisted pair (UTP) copper cable Physical Medium Dependent sublayers (PMDs) for point-to-point connections in subscriber access networks.

EFM also introduces the concept of Ethernet Passive Optical Networks (EPONs), in which a point to multipoint (Pt-MPt) network topology is implemented with passive optical splitters, along with optical fiber PMDs that support this topology. In addition, a mechanism for network Operations, Administration and Maintenance (OAM) is included to facilitate network operation and troubleshooting.

EPON is based upon a mechanism named MPCP (Multi-Point Control Protocol), defined as a function within the MAC control sublayer. MPCP uses messages, state machines, and timers, to control access to a P2MP topology. Each ONU in the P2MP topology contains an instance of the MPCP protocol, which communicates with an instance of MPCP in the OLT.

At the basis of the EPON/MPCP protocol lies the P2P Emulation Sublayer, which makes an underlying P2MP network appear as a collection of point to point links to the higher protocol layers (at and above the MAC Client). It achieves this by prepending a Logical Link Identification (LLID) to the beginning of each packet, replacing two octets of the preamble.

An Ethernet PON (EPON) network includes an *optical line terminal* (OLT) and an *optical network unit* (ONU). The OLT resides in the CO (POP or local exchange). This would typically be an Ethernet switch or Media Converter platform. The ONU resides at or near the customer premise. It can be located at the subscriber residence, in a building, or on the curb outside. The ONU typically has an 802.3ah WAN interface, and an 802.3 subscriber interface.

The ONU performs an auto-discovery process which includes ranging and the assignment of both Logical Link IDs and bandwidth. Using timestamps on the downstream GATE MAC Control Message, the ONU synchronizes to the OLT timing. It receives the GATE message and transmits within the permitted time period. The OLT generates time stamped messages to be used as global time reference. It generates discovery windows for new ONUs, and controls the registration process. The OLT also assigns bandwidth and performs ranging operations.

EPON systems use an optical splitter architecture, multiplexing signals with different wavelengths for downstream and upstream. Downstream, EPON handles the physical broadcast of 802.3 frames. These broadcast frames are extracted by the logical link ID in the preamble. 64-byte GATE messages are sent downstream to assign upstream bandwidth. For upstream control, the MPCP uses time slots containing multiple 802.3 frames, where each ONU sends a 64-byte REPORT message, with ONU state information to the OLT.

EPON is based on the Ethernet standard, unlike other PON technologies, which are based on the ATM standard. This utilizes the economies-of-scale of the Ethernet, and provides simple, easy-to-manage connectivity to Ethernet-based, IP equipment, both at the customer premises and at the central office. As with other Gigabit Ethernet media, it is well-suited to carry packetized traffic, which is dominant at the access layer, as well as time-sensitive voice and video traffic.

The IEEE 802.3ah EPON specification defines Multi-Point Control Protocol (MPCP), Point-to-Point Emulation (P2PE), and two 1490/1310 nm PMDs for 10 and 20 km, required to build an EPON system. EPON as a protocol is still under work within the IEEE EFM group.

Another protocol is known as APON (ATM PON). APON systems are based upon ATM as the bearer protocol. Downstream transmission is a continuous ATM stream at a bitrate of 155.52 Mb/s or 622.08 Mb/s with dedicated Physical Layer OAM (PLOAM) cells inserted into the data stream. Upstream transmission is in the form of bursts of ATM cells, with a 3 byte physical overhead appended to each 53 byte cell in order to allow for burst transmission and reception. APONs are defined within the FSAN organization as well as the ITU-T.

The transmission protocol is based upon a downstream frame of 56 ATM cells (53 bytes each) for the basic rate of 155 Mb/s, scaling up with bitrate to 224 cells for 622 Mb/s. The upstream frame format is 53 cells of 56 bytes each (53 bytes of ATM cell + 3 bytes OH) for the basic 155 Mb/s rate.

The downstream frame is constructed from 2 PLOAM cells, one at the beginning of the frame and one in the middle, and 54 data ATM cells. Each PLOAM cell contains grants for upstream transmission relating to specific cells within the upstream frame (53 grants for the 53 upstream frame cells are mapped into the PLOAM cells) as well as OAM&P messages. Upstream transmission consists of either a data cell, containing ATM data in the form of VPs/VCs or may contain a PLOAM cell instead when granted a PLOAM opportunity from the central OLT.

The initial PON specifications defined by the FSAN committee used ATM as their layer 2 signaling protocol. As such, they became known as ATM-based PONs or APONs. Use of the term APON led users to believe that only ATM services could be provided to end-users, so the FSAN decided to broaden the name to Broadband PON (BPON). BPON systems offer numerous broadband services including Ethernet access and video distribution. BPON networks are defined by the FSAN and ITU committees comprised of both equipment vendors and service providers.

In 2001 the FSAN group initiated a new effort for standardizing PON networks operating at bitrates of above 1 Gb/s. Apart from the need to support higher bitrates, the overall protocol has been opened for re-consideration and the sought solution should be the most optimal and efficient in terms of support for multiple services, OAM&P functionality and scalability. As a result of this latest FSAN effort, a new solution has emerged into the optical access market place - GPON (Gigabit PON), offering unprecedented high bitrate support while enabling transport of multiple services, specifically data and TDM, in native formats and at an extremely high efficiency.

As part of the GPON effort a Gigabit Service Requirements (GSR) document has been put in place based upon the collected requirements from all member service providers, representing the leading RBOCs and ILECs of the world. New standards covering the GSR as well as the physical medium are defined in ITU-T standards G.984.1 and G.984.2. Recommendation G.984.3 covers the protocols and is a draft standard agreed to be consented in the next ITU-T SG15 meeting, October 2003.

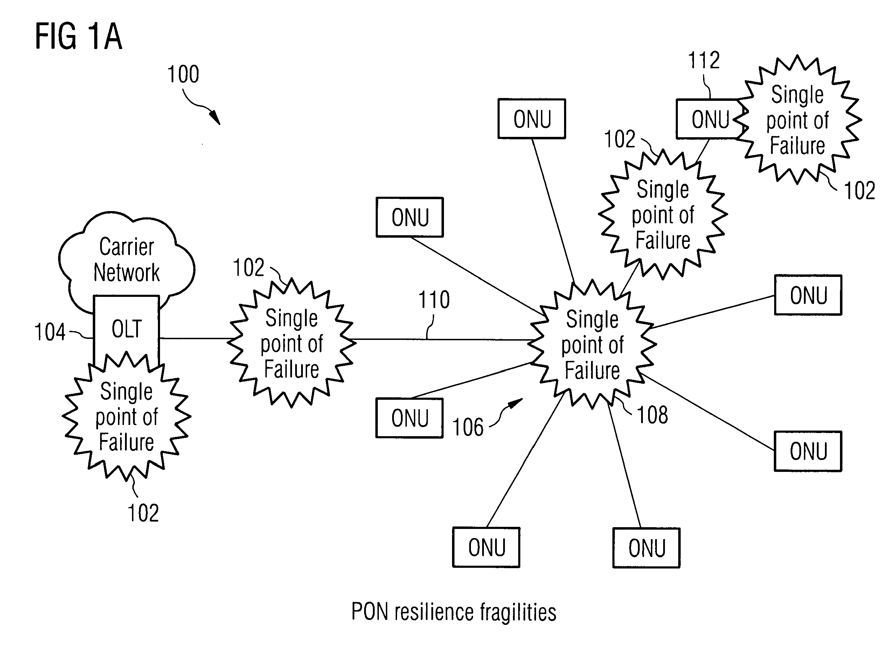

Whether the protocol be EPON, APON, BPON or GPON, Passive Optical Networks (PON) have several single points of failure. In the PON system 100 depicted in Figure 1a there are several single points of failure 102. There may be a single point of failure at the OLT 104, for example. There may also be a point of failure in the fiber between OLT and splitter 106. Or there might be a failure in the splitter itself 108.

Again, there may be a point of failure in the fiber 110 between splitter and ONU or there may be a point of failure in the ONU 112 itself.

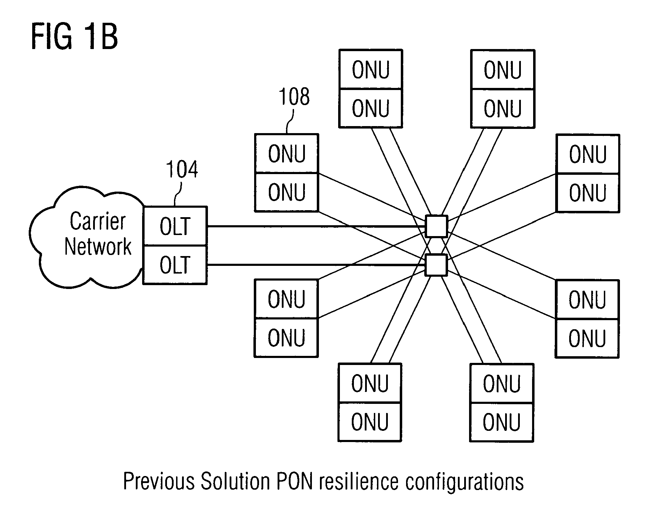

Approaches to solve this problem are referred to in patents as EP 0 597 719; EP 1 041 852; EP 1 176 765; US 2002/0097465. However, all of these proposed solutions require the duplication of an optical fiber between local offices where the OLT is located and the costumer premises were the ONU is located. This duplication causes an unnecessary redundancy of resources, illustrated in Figure 1b, where it is shown that each OLT 104 and ONU 108, as well as the fibers interconnecting the elements, are duplicated.

It shall also be noticed that two splitters 114 are additionally needed. This is completely inefficient. For one thing, each splitter has an attenuating affect on the signal. The degree of attenuation depends on the coupler construction. (and also because each splitter have a cost

Thus, it is clear that the previous techniques for handling points of failure in a PON, or PON-type, network must be more efficiently addressed. What is needed is an invention with a different network configuration that allows fiber and OLT protection without the necessity of additional fibers.

### DETAILED DESCRIPTION

In solving the problems heretofore presented, the solution is presented here for a generic PON schema. Since the usual tree presentation for PON topology the real physical fiber topology is usually in the form of a Ring or Bus, a solution for both topologies is here anyalyzed.

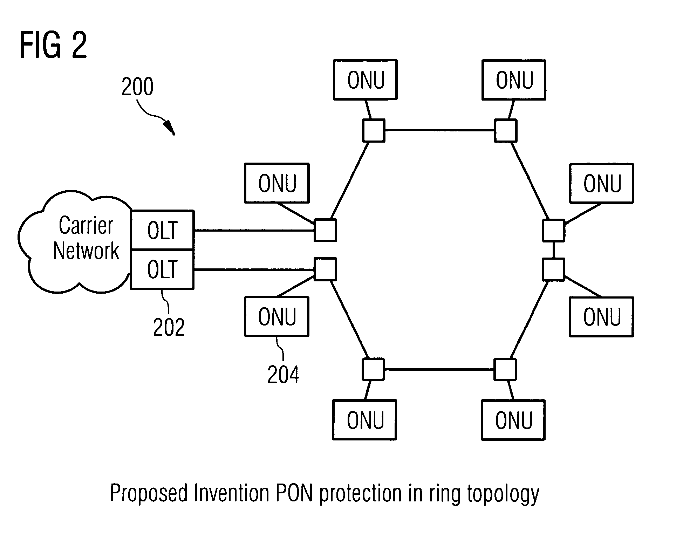

We consider first a solution for the ring topology 200 with reference to Figure 2. One possible solution to the problem of point of failure in a PON is, as shown, to arrange the PON in a ring configuration. In the figure, there OLTs 202 for each end of the ring with ONUs 204 along each point in the ring.

The disadvantage of this protection schema is the unusual splitter configuration. Instead of 1 splitter for 8 ONUs, a 1:8 ratio, the splitter configuration in the example of Figure 2a depicts that it is necessary to employ 8 splitters. In reality the splitter 1:8 is usually composed by 7 splitters 1:2.

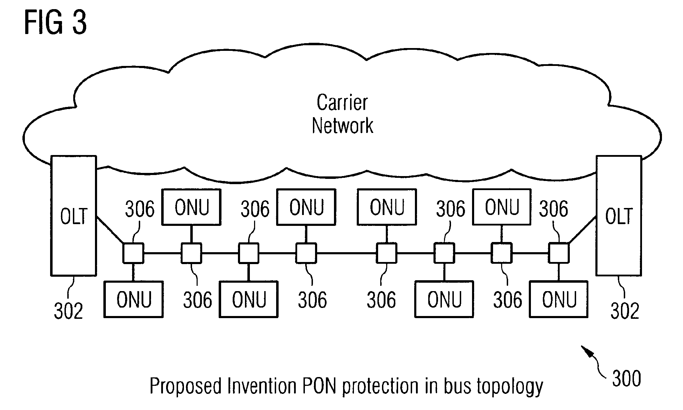

Turning now to the Bus topology in Figure 3, a similar solution can be provided as in the previous example. At either end of the Bus 300, there is positioned OLTs 302 with intervening ONUs 304 connected to the Bus by splitters 306. As will be seen, the configuration in Figure 3 also requires 8 splitters.

The first problem to overcome in this configuration is the unusual numbers of couplers needed. As noted with regard to Figures 1a and 1b, the previous solutions required additional splitters. In order to overcome the problems of the proposed solutions in Figures 2 and 3, this invention proposes a new device that is herein referred to as a Three-Way-Coupler.

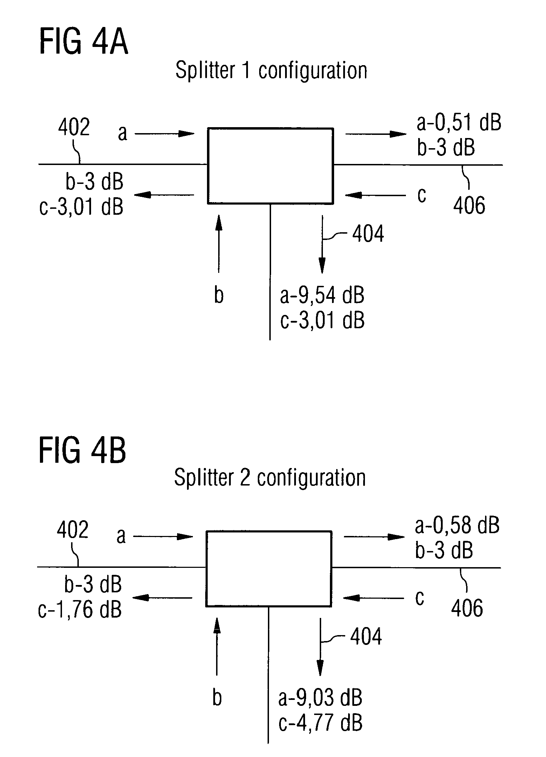

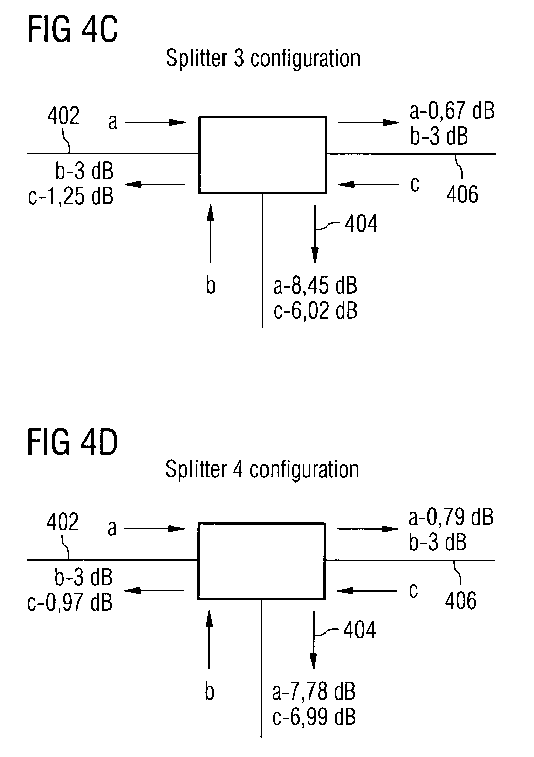

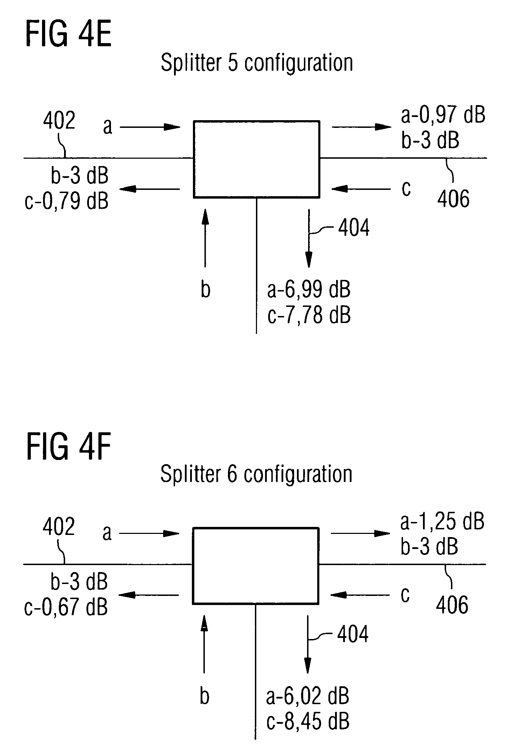

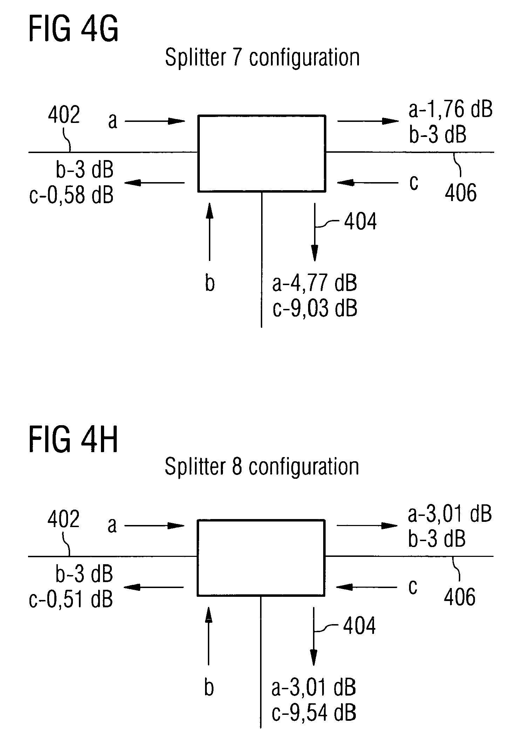

The proposed device is shown in Figure 4a. The invention shown in Figure 4a is a Three-Way-Coupler 400, that is a coupler with three bi-directional input/outputs, and functions as both a splitter and a coupler. As shown in the Figure, there is a terminal 402 that inputs a signal a and outputs signals b and c. A terminal 404 inputs the signal b and outputs signals a and c. A terminal 406 inputs the signal c and outputs signals a and b.

As can be seen from the figure, in one direction the optical power is split and, hence, the invention acts as a splitter. Signal a, for example, is input to terminal 402 and split between terminals 404 and 406. Similarly, signals b and c are input to terminals 404 and 406, respectively, and split between the remaining terminals. In the opposite direction, the invention acts as an adder, that is, joins the signal from both inputs and can be viewed as a coupler.

Figures 4b-h show variations of the inventive coupler in Figure 4a. The difference between each of the variations is the Optical Coupler (Splitter) configuration. The Splitters can divide the optical output into different parts. In each drawing (14 and 15 of ID) there are three splitters. The configuration of each splitter is defined by a b and c in figures 4a to 4h.

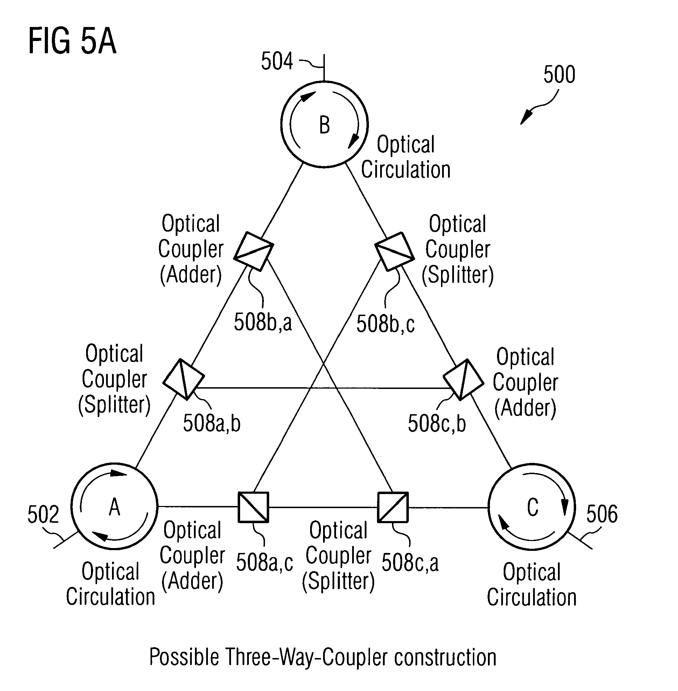

Figure 5a illustrates, in optical hardware symbols, one way in which the inventive Three-Way-Coupler 500 might be constructed. As shown in the figure, optical circulators 502, 504 and 506 are situated at each of the three input/outputs (a, b, c). The optical circulators are each connected to, on one side, an optical coupler (splitter) and an optical coupler (adder), on the other.

If we assign the three input/outputs to a, b and c, for example, we can label the optical couplers in terms of the respective optical circulator and the optical coupler belonging to an adjacent optical circulator. Thus, optical coupler connected to the optical circulator of input/output a and adjacent the optical circulator b is referred to as 508 a,b. Similarly, optical coupler connected to the optical circulator of input/output b and adjacent the optical circulator a is referred to as 508 b,a. And so forth. Optical coupler connected to the optical circulator of input/output a and adjacent the optical circulator c is referred to as 508 a,c. Optical coupler connected to the optical circulator of input/output b and adjacent the optical circulator c is referred to as 508 b,c. Optical coupler connected to the optical circulator of input/output c and adjacent the optical circulator a is referred to as 508 c,a. Optical coupler connected to the optical circulator of input/output c and adjacent the optical circulator b is referred to as 508 c,b.

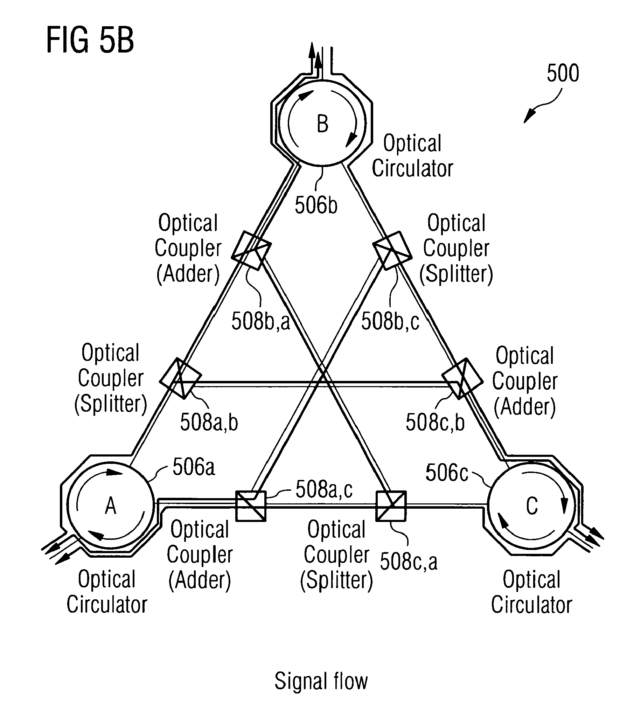

In the configuration shown, an optical coupler (splitter) of one optical circulator is connected to an optical coupler (adder) opposite, or orthogonal, thereto. The signal flow of the configuration is shown in Figure 5b

Signal (a) input to input/output terminal is passed by optical circulator 506a to optical coupler (splitter) 508 a,b. From there, signal (a) is split and sent to optical coupler (adder) 508 b,a and optical (adder) 508 c,b. Signal (a) is then added with signal (c), which is propagated through optical circulator 506 c and split at optical coupler (splitter) 508 c,a, and output by optical circulator 506b. The other portion of signal (c) that is split by optical coupler (splitter) 508 c,a is forwarded to optical coupler (adder) 508 a,c that adds that portion of signal b that is split by optical coupler (splitter) 508 b,c. Optical circulator 506b inputs signal (b), which is split by optical coupler (splitter) 508 b,c and fed to optical coupler (adder) 508 a,b and optical adder 508 c,b. Optical adder 508 b,c adds the split signal (b) with signal (a) and outputs the combined signal through optical circulator 506c.

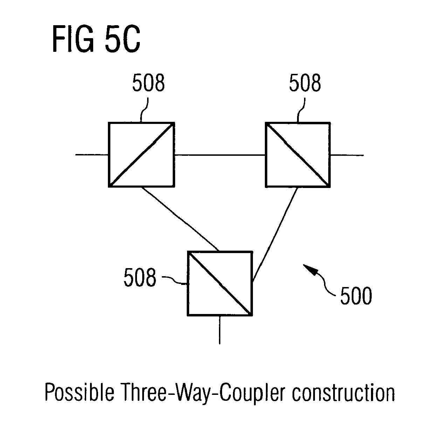

Figure 5c shows an alternative configuration for the three-way-coupler 500. Here, three couplers 508 are connected in a ring.

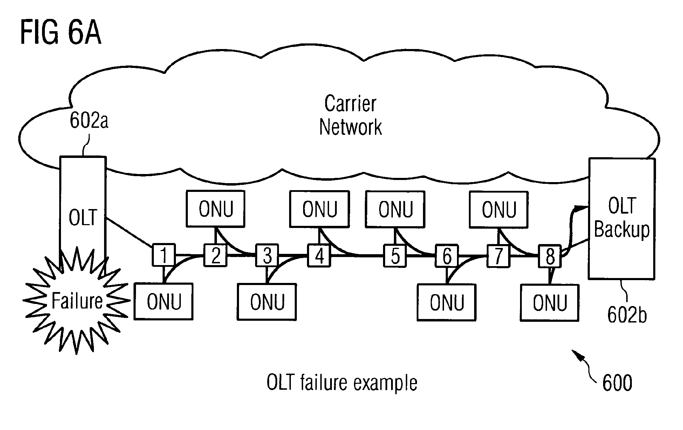

The operation of the three-way-coupler will now be described with reference to the PON network 600 of Figure 6a. Effectively, with the configuration of the present invention, only one OLT is active 602a, the other is in stand by 602b, herein-referred to as a hot standby. The backup OLT, either of 602a or 602b, is always watching the fiber. When the backup OLT stops receiving the signal, the primary OLT starts to operate. The affected ONU then registers with the newly active OLT (Backup OLT). When the failure is recovered, both OLTs 602 a,b will receive the other's OLT information. The backup OLT returns to the idle state and the affected ONU registers with the new active OLT (Primary OLT).

It is also possible to exchange the roles of both OLTs. Such an innovation although would require a modification in the OLT (it must be able to listen to both ONUs and OLT) although it does not require any exchange in the ONU units.

In typical practice, optical information is detected by a photo diode. Each photo diode detects optical power at a certain wavelength. In EPON, for example, the wavelength transmitted by an ONU laser is different than the wavelength transmitted by an OLT. The OLT to be used with the present invention should have two photo diodes, one for each wavelength. Normally, the OLT has one photo diode per ONU wavelength. For this invention, therefore, it would be practical to have an additional photo diode for the OLT transmission wavelength.

On the other hand, if the primary OLT fails the backup OLT stops receiving the signal from the primary OLT and starts to operate. All ONUs then register in the new active OLT (Backup OLT). When the failure is recovered both OLTs will receive OLT information from the other OLT units. One of the OLT stops transmission and the ONUs must register in the new active OLT.

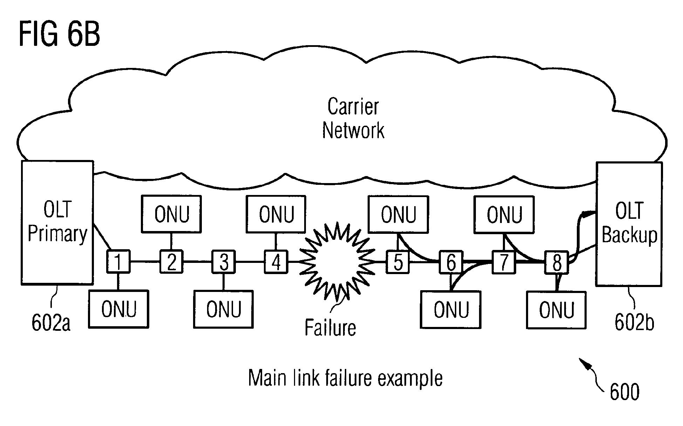

Now with respect to Figure 6b, we consider the example where the link between both OLTs fails. In this case, the backup OLT stops receiving the signal from the primary OLT and starts to operate. Only the affected ONUs must register in the newly active OLT (Backup OLT), here the right side of the PON network. When the failure is recovered both OLTs will receive the others OLT information. The backup OLT returns to the idle state and the affected ONU (right half in the example depict in figure 6b) register with the new active OLT (Primary OLT). If, for the moment, we consider that the OLTs exchange roles, the left half of the network shown in Figure 6b would re-register. It shall be appreciated that both OLTs would not be working at the same time under normal conditions.

It will also be appreciated that the new proposal for an OLT can combine the capabilities OLT and ONU. In other words, the backup OLT of the invention can function as an ONU in a receiving configuration. Although, it is not designed in this invention that the backup OLT carries traffic from the carrier network from one side to the other. Until now the innovation does not require any exchange in the ONU units.

There are additional issues that are mentioned here. First, a signal of one ONU travels through optical splitters and failures in the main link and the ONU. As every ONU signal travels across the main link in both directions, the signal can errantly arrive at other ONUs. To avoid this, a variant of the present invention blocks the ONU signal in the direction of the other ONUs or, otherwise, the signal should not be split. This avoids lack of security and signal power loss.

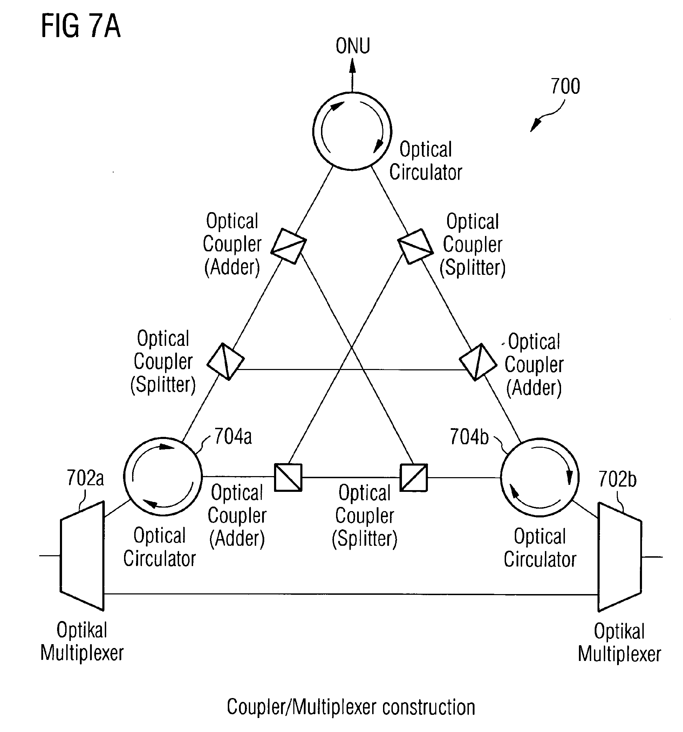

Figure 7a illustrates a Three-Way-Coupler with multiplexor 700 solution to the foregoing problem. Here, there are provided one or more optical multiplexors 702 a, b that each have a common input and the other input connected to an input/output of the optical circulators 704 a, c.

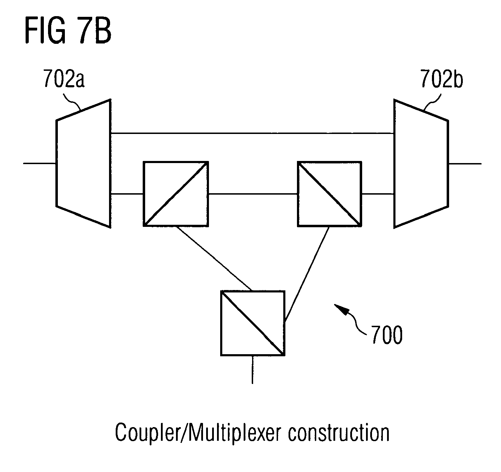

Figure 7b illustrates the multiplexor configuration 700 incorporated into the diagram of Fig. 5c. The couplers are configured in the ring configuration as in Fig. 5c, except now the multiplexors 702 a, b are integrated. There are provided one or more optical multiplexors 702 a, b that each have a common input and the other input connected to an input/output of the couplers.

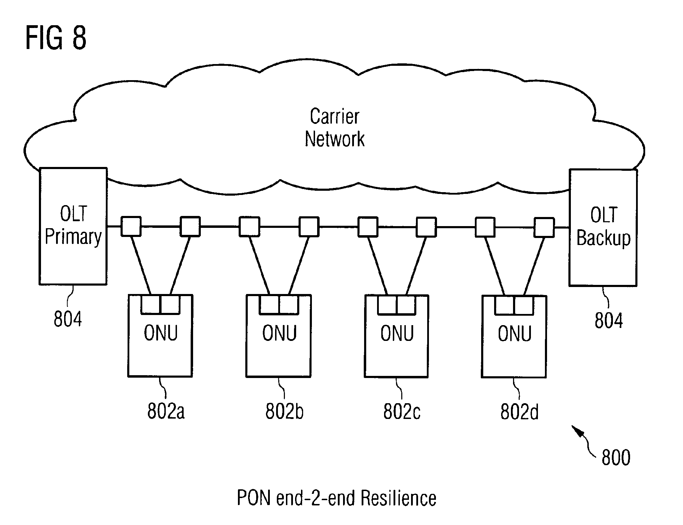

Whilst the invention speaks of a three-way-coupler, it shall be appreciated that the broader concept of a hot standby coupler is also an invention. In Fig. 8 there is provided another ONU configuration that capitalizes on the concept of a hot standby coupler to address the specific PON arrangement in Figure 3. As will be noticed, there is some fiber duplication, but this configuration attempts to minimize the additional fiber. This configuration provides PON resilience against failures in the main link and the ONU.

In the PON network 800 of Figure 8, each ONU 802 a-d utilizes two different optical couplers 804. Only one optical coupler is active, whilst the other is in hot stand by, previously described. The standby unit only operates if the link between the active port and the splitter or the splitter fails. It shall be noted that, for all ONUs in this configuration, the number of maximum supported ONUs is reduced in half as compared with the antiquated configuration of Figure 3.

It shall be noted that the previous solutions were based on the principle to eliminate fiber redundancy. The previous approaches also considered that installation of more fiber is more expensive than the proposed splitters. Considering that fiber is readily available, this makes no sense in particular that ONUs are much more expensive and more difficult to integrate than fiber.

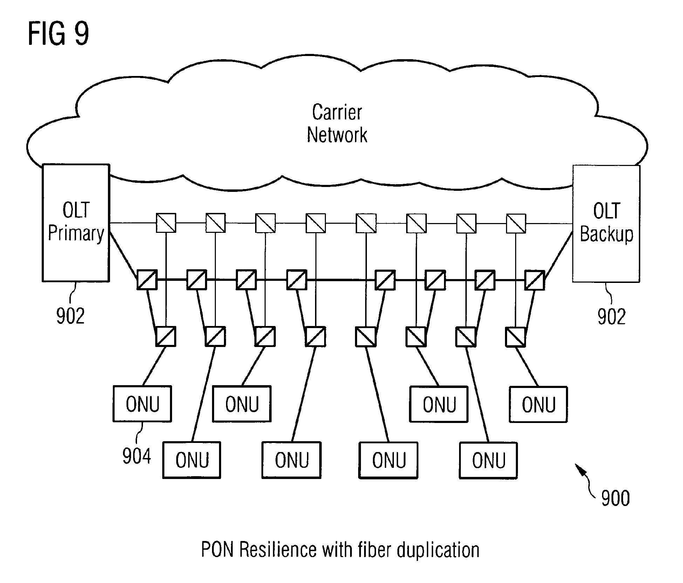

Other configurations can be achieved by the same principle. Applying again the hot standby concept of the present invention Figure 9.

As shown in Figure 9, the PON network 900 incorporates couplers 902 paired in series to each ONU 904. With the invention applied in this topology, if the primary OLT fails the backup OLT stops receiving the signal from the primary OLT and starts to operate. All ONUs register with the new active OLT (Backup OLT). When the failure is recovered both OLT will receive others OLT information.

The backup OLT stops transmission and the ONUs must register in the primary OLT. If the primary link between both OLT fails (black one) the backup OLT stops receiving the signal from the primary OLT and starts to operate. When this occurs the primary OLT detects that the backup OLT is operating and goes to idle state. Otherwise, in Figure 9 all ONUs register in the new active OLT (Backup OLT). Only if the primary link and the backup link (gray one) fail at the same time the behavior is similar to the one depict in Figure 9. It shall be noted that there is no protection against failures in both links in different places.

The topology in Figure 9, as in the previous example, requires additional fiber but the splitters are used in common. This solution avoids the use of splitters depicted in the previous figures of the prior solutions and also avoids the associated losses described in the background. As the primary OLT and the Backup OLT use different paths there is no requirement for the splitters to have different behavior according with the direction.

If instead of the usual ONU configuration we use the ONUs depicted in Figure 8, the couplers nearest to the ONUs are not used. With this protection for all ONU the number of maximum supported ONU in this case is equal.

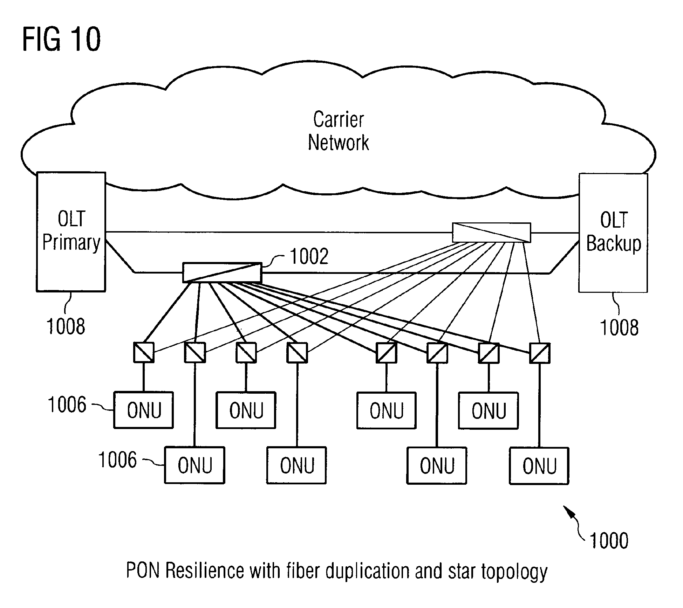

A solution can also be applied to star topology 1000 as shown in Figure 10. Here, a common coupler 1002 is connected in series to secondary couplers 1004 that individually connect to Onus 1006. OLTs 1008 are connected on either side of the common coupler 1002.

All the considerations applies to this topology. With Figure 10 we can see the differences to the other protection schemas. The backup OLT does not need to be connected to the primary OLT, but only needs to check if the other is operating. This example again uses more fiber but, on the other hand, uses common 1:N splitters.

It shall be appreciated that the proposed invention strives to maintain all current PON protocol and avoids complete PON duplication to offer end to end resilience.

## Claims

1. A three way coupler for a Passive Optical Network (PON),
**characterized in that**:
terminals Ta, Tb, Tc that input optical signals a, b, c, respectively,
at least one splitter for splitting for splitting optical signal a into signals a1 and a2, optical signal b into b1 and b2 and optical signal c into c1 and c2, and
at least one adder for adding signals a1+c2, a2+b1 and b2+c1.

2. The three way coupler of claim 1, further **characterized in that**, the combined signal a1+c2 is output through terminal Tb,
combined signal a2+b1 is output through terminal Tc, and
combined signal b2+c1 is output through terminal Ta.

3. The three way coupler of any of the previous claims, further **characterized in that**, one terminal of terminals a, b and c is connected to an ONU and the other terminals are connected to OLTs, respectively.

4. The three way coupler of claim 3, further **characterized in that**, one of the OLTs operate in a hot standby, wherein the OLT in hot standby actively detects whether the other OLT is active and takes over OLT processing when the other OLT is detected as being not active.

5. The three way coupler of any of claim 4, further **characterized in that**, when the other OLT is inactive, an associated ONU registers with the OLT in hot standby.

6. The three way coupler of any claim 4, further **characterized in that**, when the other OLT returns to active status from inactive, the OLT returns to hot standby.

7. A method for coupling OLTs and ONUs in a Passive Optical Network (PON), **characterized in that**:
inputting into terminals Ta, Tb, Tc optical signals a from a first OLT, optical signal b from a second OLT, and optical signal c from an ONU, respectively,
splitting optical signal a into signals a1 and a2, optical signal b into b1 and b2 and optical signal c into c1 and c2,
adding signals a1+c2, a2+b1 and b2+c1, and
outputting signal a1+c2 to the second OLT, signal a2+b1 to the ONU and signal b2+c1 to the first OLT.

8. The method of claim 7, further **characterized in that**, operating one of the OLTs in a hot standby, wherein the OLT in hot standby actively detects whether the other OLT is active and takes over OLT processing when the other OLT is detected as being not active.

9. The method of claim 8, further **characterized in that**, when the other OLT is detected as inactive, registering the ONU with the OLT in hot standby.

10. The method of claim 9, further **characterized in that**, returning the OLT when the other OLT returns to active status from inactive.

## Amended claims

### Amended claims in accordance with Rule 86(2) EPC.

**1.** A three way coupler (500) for a Passive Optical Network (PON), **characterized in that**:
terminals Ta, Tb, Tc (502-506) that input optical signals a, b, c, respectively,
at least one splitter (508a,b) for splitting optical signal a into signals a1 and a2, optical signal b into b1 and b2 and optical signal c into c1 and c2, and
at least one adder (508b,a) for adding signals a1+c2, a2+b1 and b2+c1.

**2.** The three way coupler (500) of claim 1, further **characterized in that** each terminal (502-506) is coupled to an adder (508b,a) and a splitter (508a,b) and that each splitter (508a,b) of each terminal (502-506) is coupled to the adder (508b,a) of an adjacent terminal (502-506).

**3.** The three way coupler (500) of claim 2, further **characterized by** an optical coupler (506a-c) arranged at each of the terminals Ta, Tb, Tc (502-506a).

**4.** The three way coupler (500) of claims 1-3, further **characterized in that**, the combined signal a1+c2 is output through terminal Tb (504),
combined signal a2+b1 is output through terminal Tc (506), and
combined signal b2+c1 is output through terminal Ta (502).

**5.** The three way coupler (500) of any of the previous claims, further **characterized in that**, one terminal (502, 504 or 506) of terminals a, b and c is connected to an ONU (304) and the other terminals are connected to OLTs (302), respectively.

**6.** The three way coupler (500) of claim 5, further **characterized in that**, one of the OLTs (302) operate in a hot standby, wherein the OLT (302) in hot standby actively detects whether the other OLT (302) is active and takes over OLT processing when the other OLT (302) is detected as being not active.

**7.** The three way coupler (500) of claim 6, further **characterized in that**, when the other OLT (302) is inactive, an associated ONU (304) registers with the OLT (302) in hot standby.

**8.** The three way coupler (500) of claim6, further **characterized in that**, when the other OLT (302) returns to active status from inactive, the OLT (302) returns to hot standby.

**9.** A method for coupling OLTs (302) and ONUs (304) in a Passive Optical Network (PON), **characterized in that**:
inputting into terminals Ta, Tb, Tc (502-506) optical signals a from a first OLT (302), optical signal b from a second OLT (302), and optical signal c from an ONU (304), respectively,
splitting optical signal a into signals a1 and a2, optical signal b into b1 and b2 and optical signal c into c1 and c2,
adding signals a1+c2, a2+b1 and b2+c1, and
outputting signal a1+c2 to the second OLT (302), signal a2+b1 to the ONU (304) and signal b2+c1 to the first OLT (302).

**10.** The method of claim 9, further **characterized in that**, operating one of the OLTs (302) in a hot standby, wherein the OLT (302) in hot standby actively detects whether the other OLT (302) is active and takes over OLT (302) processing when the other OLT (302) is detected as being not active.

**11.** The method of claim 10, further **characterized in that**, when the other OLT (302) is detected as inactive, registering the ONU (304) with the OLT (302) in hot standby.

**12.** The method of claim 11, further **characterized in that**, returning the OLT (302) when the other OLT (302) returns to active status from inactive.

**13.** The method of claims 9-12 , further **characterized by** coupling each terminal (502-506) an adder (508b,a) and a splitter (508a,b) and coupling each splitter (508a,b) of each terminal (502-506) to the adder (508b,a) of an adjacent terminal (502-506).

**14.** The method of claims 9-13, further **characterized by** arranging an optical coupler (506a-c) at each of the terminals Ta, Tb, Tc (502-506a).
